# EUROPÄISCHE PATENTSCHRIFT

(11) **EP 2 722 116 B1**
(45) Veröffentlichungstag und Bekanntmachung des Hinweises auf die Patenterteilung: **06.12.2017**
(21) Anmeldenummer: 13188517.0
(22) Anmeldetag: 14.10.2013
(51) Int. Cl.: B21K 1/56, B23P 15/32, B21K 5/02

(54) **Verfahren und Kneifbackenpaar zum Herstellen einer Bohrspitze, und Schraube, Bohrer oder Bohrniet**
Method and pressing jaw pair for producing a drill bit, and screw, drill or rivet
Procédé et paire de mâchoires de pincement destinés à la fabrication d'une vis de forage, et vis ou rivet de forage ou foreur

(30) Priorität: 19.10.2012 DE 102012219121
(43) Veröffentlichungstag der Anmeldung: 23.04.2014
(73) Patentinhaber: Adolf Würth GmbH & Co. KG, 74653 Künzelsau (DE); Würth International AG, 7000 Chur (CH)
(72) Erfinder: Wunderlich, Andreas, 74635 Kupferzell (DE); Eckert, Rainer, 97990 Weikersheim (DE)
(74) Vertreter: Patentanwälte Ruff, Wilhelm, Beier, Dauster & Partner mbB

(56) Entgegenhaltungen:
- DE-A1-102010 041 164
- US-A- 3 204 516
- US-A- 5 980 390

## Beschreibung

Die Erfindung betrifft ein Verfahren zum Herstellen einer Bohrspitze, eine Schraube, Bohrer oder Bohrniet und ein Kneifbackenpaar zum Herstellen einer Bohrspitze.

Es ist bekannt, dass man Schrauben mit einer Bohrspitze versehen kann, die es ermöglicht, dass die Schraube ohne vorzubohren eingeschraubt werden kann. Solche Bohrspitzen weisen in der Regel zwei Schneidkanten auf, die unter einem stumpfen Winkel angeordnet sind. Zum Herstellen einer solchen Bohrspitze ist es bekannt, das Schraubenende zwischen zwei Backen anzuordnen, die dann schlagartig aufeinander zu bewegt werden. Das dabei verdrängte Material bildet einen Butzen. Dieser Butzen soll nicht von der fertig gestellten Bohrspitze getrennt werden, da beim Auswerfen einer fertigen Schraube oder eines Rohlings dieser durch den Butzen geschützt werden soll.

Bei der derzeit üblichen Fertigungsmethode ist der Butzen an allen Seiten mit der hergestellten Bohrspitze durch eine Trennstelle verbunden, in der das Material so dünn ist, dass der Butzen nach dem Auswerfen des Rohlings durch eine Drehbewegung von der Bohrspitze getrennt werden kann. Bei dieser Trennung entsteht jedoch eine mit einem Grat versehene Trennfläche. Beispielsweise wird das Material an der späteren Trennstelle auf eine Dicke von 0,1 mm verformt, so dass nach dem Abtrennen des Butzens ein Grat von etwa 0, 1 mm bis 0,2mm übrig bleibt. Ein solcher Grat bildet eine Verschlechterung der Schneidkante der Bohrspitze, so dass sich die Einschraubzeiten beim Einschrauben von Schrauben mit solchen Bohrspitzen verlängern.

Ein solches Verfahren zum Herstellen einer Bohrspitze mithilfe eines Kneifbackenpaars ist aus DE 10 2010 041 164 A1 bekannt. Der Butzen ist also auch längs der späteren Schneidkanten mit der Bohrspitze verbunden.

Ein weiteres solches Verfahren und zugehörige Kneifbacken sind in dem US-Patent US 5,980,390 beschrieben. Ein Butzen verbleibt nach dem Kneifen mittels der Kneifbacken zunächst an der Bohrspitze, wobei Sollbruchstellen sowohl zwischen einer Schneidkante als auch den axialen Längskanten ausgebildet sind. Der Butzen wird dann einstückig von der Bohrspitze getrennt.

Aus dem US-Patent US 3,204,516 ist ebenfalls das Ausbilden einer Bohrspitze an einer Schraube mittels zweier Kneifbacken beschrieben. Der Butzen ist nach dem Kneifen mit den Schneidkanten der Bohrspitze noch mittels einer Sollbruchstelle verbunden und wird dann von der Bohrspitze abgetrennt.

Der Erfindung liegt die Aufgabe zu Grunde, eine Möglichkeit zu schaffen, eine Verbesserung der Einschraubzeiten bzw. der dem Einschraubvorgang vorausgehenden Bohrung zu erreichen.

Zur Lösung dieser Aufgabe schlägt die Erfindung ein Verfahren mit den Merkmalen des Anspruchs 1, eine Schraube, Bohrer oder Bohrniet mit den Merkmalen des Anspruchs 5 und ein Kneifbackenpaar mit den Merkmalen des Anspruchs 6 vor. Weiterbildungen der Erfindung sind Gegenstand von Unteransprüchen.

Der Butzen wird also durch das Schließen der beiden Kneifbacken, d.h. durch die Bewegung der Kneifbacken aufeinander zu, längs der Schneidkanten von der Bohrspitze getrennt. Die Sollbruchstelle wird an den Längsseiten des Drahtstifts erzeugt.

Ähnlich wie im Stand der Technik bleibt nach dem Entformen der Bohrspitze der Butzen an der Bohrspitze befestigt, so dass er diese nach dem Auswerfen weiterhin schützt. Aber der Grat existiert nur noch an den beiden axialen Längsseiten der Bohrspitze, so dass sich die beiden Schneidkanten, die für das Bohren verantwortlich sind, praktisch gratlos herstellen lassen. Der an den Längskanten weiterhin vorhandene Grat stört dort nicht.

Zur Trennung des Butzens von den Schneidkanten der Bohrspitze kann in Weiterbildung der Erfindung vorgesehen sein, dass dort ein Scheren stattfindet. Ebenfalls möglich ist ein Schneiden und oder ein Stanzen oder Kombinationen dieser Möglichkeiten.

Insbesondere kann in Weiterbildung der Erfindung vorgesehen sein, dass sich die Trennung des Butzens von dem Drahtstift bzw. der geformten Bohrspitze über die gesamte Länge der Schneidkanten der Bohrspitze erstreckt.

In weiterer Ausgestaltung der Erfindung kann vorgesehen sein, dass die beiden Kneifbacken, die zur Herstellung der Bohrspitze verwendet werden, identisch ausgebildet sind, das heißt baugleich.

Die Erfindung schlägt ebenfalls ein Kneifbackenpaar vor, mit dem eine derartige Bohrspitze hergestellt werden kann, insbesondere die Bohrspitze einer selbstbohrenden Schraube.

Erfindungsgemäß besteht das Kneifbackenpaar aus zwei Kneifbacken, die jeweils eine Vertiefung aufweisen, die in geschlossenem Zustand der beiden Kneifbacken, wenn diese nämlich aneinander anliegen, die Negativform der Bohrspitze bilden. Die Vertiefung ist in jeder Kneifbacke von einem Aufnahmeraum umgeben, in den das verdrängte Material zur Bildung des Butzens fließt. Dabei ist die Grenze zwischen der Vertiefung und dem Aufnahmeraum längs der späteren Längsseitenkanten der Bohrspitze so ausgebildet, dass in geschlossenem Zustand der beiden Kneifbacken sich diese Grenzen nicht berühren, sondern einen Abstand aufweisen, der dafür sorgt, dass das Material dort nicht zertrennt wird. Andererseits ist die Grenze zwischen der Vertiefung und dem Aufnahmeraum längs der späteren Schneidkanten der Bohrspitze so ausgebildet, dass dort eine Trennung zwischen der Bohrspitze und dem Butzen erfolgt.

In Weiterbildung kann vorgesehen sein, dass längs der späteren Längsseiten der Bohrspitze eine Kneifkante einer Fläche gegenüberliegt.

In Weiterbildung kann vorgesehen sein, dass die Grenze zwischen der Vertiefung und dem Aufnahmeraum längs der Schneidkanten der Bohrspitze bei mindestens einer Kneifbacke eine Schneidkante oder Scherkante aufweist. Damit soll dafür gesorgt werden, dass an dieser Stelle eine Scherung zwischen der Bohrspitze und dem Butzen stattfindet.

Als besonders sinnvoll hat es sich herausgestellt, wenn in Weiterbildung der Erfindung die beiden Kneifbacken identisch bzw. baugleich sind.

Die Erfindung schlägt ebenfalls eine Schraube, Bohrer oder Bohrniet mit einer Bohrspitze vor, bei der die Bohrspitze durch das hier beschriebene Verfahren und/oder unter Verwendung der hierin beschriebenen Kneifbacken herstellbar ist.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: in vergrößertem Maßstab die Ansicht der Innenseite einer Kneifbacke;
- Figur 2: vereinfacht die Ansicht des maßgeblichen Teils der Kneifbacke;
- Figur 3: in einer Seitenansicht zwei Kneifbacken eines Kneifbackenpaars;
- Figur 4: schematisch die Ansicht des vorderen Endes eines Drahtstifts mit Bohrspitze und Butzen.

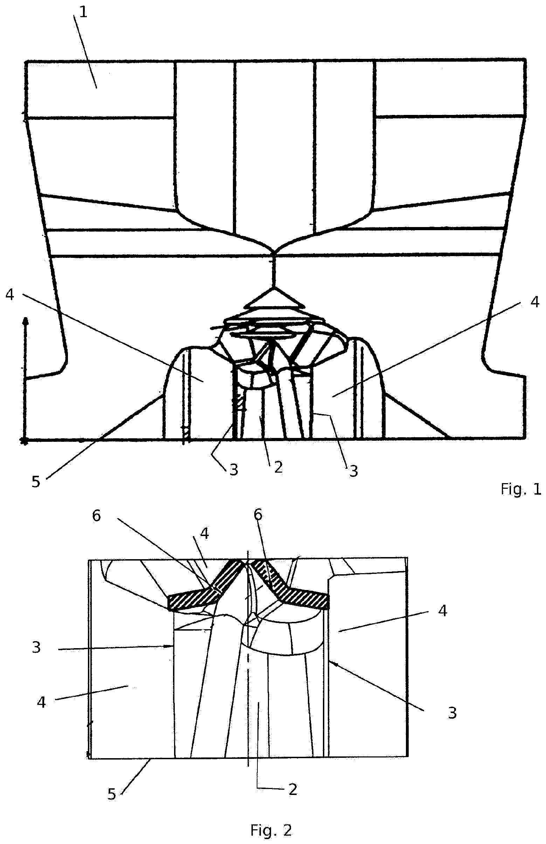

Die Figur 1 zeigt eine Kneifbacke eines Kneifbackenpaars aus der Sicht der anderen Kneifbacke. Die Kneifbacke 1 ist in der Zeichnung so orientiert, dass der Drahtstift, dessen Ende mit einer Bohrspitze versehen werden soll, von unten her in die Vertiefung 2 hinein ragt. Die Vertiefung 2 ist rechts und links durch jeweils eine Kneifkante 3 von einem Aufnahmeraum 4 umgeben. Zu der in Figur 1 unten dargestellten Unterseite 5 der Kneifbacke 1 ist die Vertiefung 2 offen. Oberhalb der Vertiefung 2 ist ebenfalls der Aufnahmeraum 4 vorhanden.

Einzelheiten der Vertiefung 2 und des sie umgebenden Aufnahmeraums 4 gehen aus der Figur 2 hervor. Wie bereits erwähnt, wird die Vertiefung 2 rechts und links, also an den parallel zueinander verlaufenden Längsseiten der Vertiefung, durch jeweils eine Kneifkante 3 begrenzt. Der Abstand der Kneifkanten 3 voneinander entspricht dem Durchmesser des Drahtstifts, an dessen vorderen in der Vertiefung 2 anzuordnenden Ende die Bohrspitze angeformt werden soll.

Das in Figur 1 und Figur 2 obere Ende der Vertiefung 2 wird durch zwei in der Figur 2 schraffierte dargestellte Scherkanten 6 von dem Aufnahmeraum 4 getrennt.

Die Scherkanten sind so ausgebildet, dass sie in Zusammenwirken mit der zweiten Kneifbacke des Kneifbackenpaars beim Zusammenführen des Kneifbackenpaars eine Scherung des zwischen ihnen vorhandenen Materials durchführen. Dies bedeutet auch, dass sie bis zu der Trennfläche zwischen dem Paar von Kneifbacken 1 vorstehen, während die Kneifkanten 3 nur bis kurz vor der Trennfläche reichen, um beim Kneifen dort einen Materialrest stehen zu lassen, durch den der Butzen an der Schraube gehalten ist.

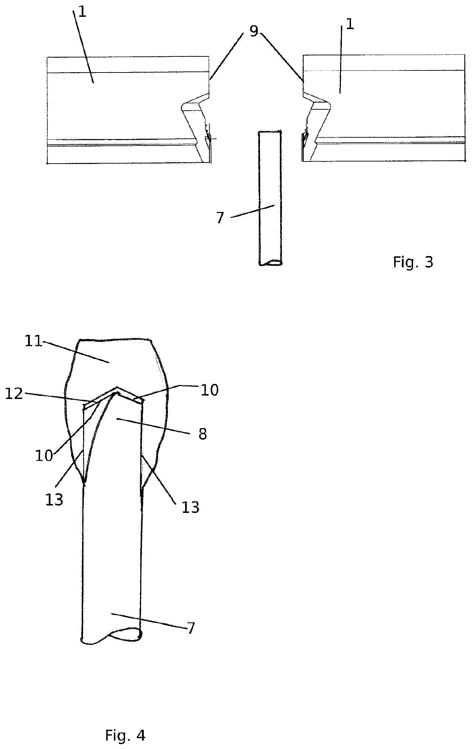

Figur 3 zeigt ein Kneifbackenpaar mit dem zwischen ihnen angeordneten Drahtstift. Aus dieser Position werden die beiden Kneifbacken 1 bis fast zur gegenseitigen Berührung aufeinander zu bewegt, beispielsweise bis auf einen Abstand von etwa 0,01 - 0,05 mm. Während des Schließens der Kneifbacken 1 wird das Ende des Drahtstifts 7 in die gewünschte Form der Bohrspitze umgeformt. Das dabei verdrängte Material des Endes 8 des Drahtstifts 7 fließt zunächst sowohl über die Kneifkanten 3 als auch über die Scherkanten 6 in den Aufnahmeraum 4. Erst im letzten Bewegungsabschnitt vor dem Totpunkt der Bewegung der beiden Kneifbacken mit dem Minimalabstand zwischen ihren Stirnflächen 9, siehe Figur 3, erfolgt ein Durchtrennen des Materials längs der beiden Scherkanten 6. Damit sind dann die Schneidkanten 10 des vorderen Endes 8 des Drahtstifts 7, also die Schneidkanten 10 der Bohrspitze, von dem durch das verdrängte Material gebildeten Butzen 11 getrennt.

In vereinfachter und vergrößerter Form zeigt die Figur 4 diese Trennung längs der Schneidkanten 10 als einen Schlitz 12.

Die von den Kneifkanten 3 gebildeten Kerben 13 bilden eine Sollbruchstelle, so dass der Butzen 11 nach dem Auswerfen des mit einer Bohrspitze versehenen Rohlings von diesem getrennt werden kann.

Die mithilfe dieser Walzbacken nach dem beschriebenen Verfahren gebildete Bohrspitze eignet sich als Bohrspitze für eine Schraube, aber auch als Bohrspitze für einen Bohrer, insbesondere dann, wenn es sich um einen Einwegbohrer handelt. Aber auch bei Schussnieten bzw. bei Bohrnieten kann eine solche Bohrspitze verwendet werden.

Das beschriebene Verfahren zum Anformen einer Bohrspitze an einem Drahtstift mithilfe eines Kneifbackenpaars sieht vor, den beim Anformen der Bohrspitze durch das verdrängte Material gebildeten Butzen längs der Schneidkanten der hergestellten Bohrspitze durch den Kneifvorgang selbst von der Bohrspitze abzutrennen und nur längs der Längsseitenkanten der Bohrspitze mit dieser durch eine Sollbruchstelle verbunden zu lassen.

## Patentansprüche

1. Verfahren zum Herstellen einer Bohrspitze, insbesondere der Bohrspitze einer Schraube, mit folgenden Verfahrensschritten:
1.1 ein Drahtstift (7) wird mit einem Ende (8) in dem Zwischenraum zwischen zwei beabstandeten Kneifbacken (1) positioniert,
1.2 die Kneifbacken (1) werden aufeinander zu bewegt,
1.3 beim Schließen der Kneifbacken (1) wird:
1.3.1 die Bohrspitze zwischen den beiden Kneifbacken (1) geformt,
1.3.2 das überschüssige Material in einen das Ende (8) des Drahtstifts (7) umgebenden Butzen (11) verdrängt,
1.3.3 der Butzen (11) an den Längsseiten des Drahtstifts (7) zur Bildung einer Sollbruchstelle verformt,
1.3.4 der Butzen (11) längs der Schneidkanten (10) der Bohrspitze von dem Drahtstift (7) getrennt; und
1.4 nach dem Entformen der Bohrspitze wird der Butzen (11) von dem Drahtstift (7) abgeschert.

2. Verfahren nach Anspruch 1, bei dem zwei identische Kneifbacken (1) verwendet werden.

3. Verfahren nach Anspruch 1 oder 2, bei dem zur Trennung des Butzens (11) von der Bohrspitze der Butzen (11) längs der Schneidkanten (10) abgeschert wird.

4. Verfahren nach einem der vorhergehenden Ansprüche, bei dem die Trennung zwischen dem Butzen (11) und dem Drahtstift (7) sich über die gesamte Länge der Schneidkanten (10) erstreckt.

5. Schraube, Bohrer oder Bohrniet mit einer Bohrspitze, herstellbar nach dem Verfahren nach einem der vorhergehenden Ansprüche, wobei die Bohrspitze mittels Bewegen von zwei Kneifbacken (1) aufeinander zu geformt ist und zwei Schneidkanten (10) und zwei axiale Längskanten aufweist, **dadurch gekennzeichnet, dass** die beiden Schneidkanten (10), aufgrund des Trennens eines Butzens (11) von der Bohrspitze längs der Schneidkanten (10) beim Schließen der Kneifbacken (1), gratlos ausgebildet sind und dass, aufgrund des anschließenden Abscherens des Butzens (11) von der Bohrspitze entlang einer Sollbruchstelle an den axialen Längskanten zwischen dem Butzen (11) und der Bohrspitze, an den beiden axialen Längskanten ein Grat vorhanden ist.

6. Kneifbackenpaar zur Herstellung einer Bohrspitze, insbesondere einer Bohrspitze einer Schraube, bei dem
6.1 jede Kneifbacke (1) eine Vertiefung (2), die
6.2 im geschlossenen Zustand der Kneifbacken (1) die Negativform der Bohrspitze bildet, und
6.3 einen die Vertiefung (2) umgebenden das beim Herstellen der Bohrspitze verdrängte Material aufnehmenden Aufnahmeraum (4) aufweist, wobei
6.4 die Grenze zwischen der Vertiefung (2) und dem Aufnahmeraum (4) längs der beiden parallel zu der Vertiefungslängsachse verlaufenden Seiten derart ausgebildet ist, dass
6.5 die beiden Kneifbacken (1) sich an dieser Grenze im geschlossenen Zustand des Kneifbackenpaars nicht berühren, und
6.6 die Grenze zwischen der Vertiefung (2) und dem Aufnahmeraum (4) längs der beiden herzustellenden Schneidkanten (10) derart ausgebildet ist, dass
6.7 die beiden Kneifbacken (1) sich an dieser Grenze in geschlossenem Zustand des Kneifbackenpaars mindestens abschnittsweise berühren bzw. überschneiden.

7. Kneifbackenpaar nach Anspruch 6, bei dem die Grenze zwischen der Vertiefung (2) und dem Aufnahmeraum (4) bei mindestens einer Kneifbacke (1) längs mindestens einer Längsseite eine Kneifkante (3) aufweist.

8. Kneifbackenpaar nach Anspruch 6 oder 7, bei dem die Grenze zwischen der Vertiefung (2) und dem Aufnahmeraum (4) längs beider herzustellenden Schneidkanten (10) der Bohrspitze bei mindestens einer Kneifbacke (1) eine Schneidkante bzw. Scherkante (6) aufweist.

9. Kneifbackenpaar nach einem der Ansprüche 6 bis 8 , bei dem beide Kneifbacken (1) identisch ausgebildet sind.

## Claims

1. A method for the manufacture of a drill bit, in particular the drill bit of a screw, with the following steps in the method:
1.1 a wire nail (7) is positioned with one end (8) in the intermediate space between two pincer jaws (1) that are spaced apart,
1.2 the pincer jaws (1) are moved towards one another,
1.3 in the course of closure of the pincer jaws (1) :
1.3.1 the drill bit is formed between the two pincer jaws (1),
1.3.2 the excess material is displaced into scrap material (11) surrounding the end (8) of the wire nail (7),
1.3.3 the scrap material (11) is deformed on the longitudinal sides of the wire nail (7) so as to form a defined line of fracture,
1.3.4 the scrap material (11) is separated from the wire nail (7) along the cutting edges (10) of the drill bit; and
1.4 after the demoulding of the drill bit the scrap material (11) is sheared off from the wire nail (7).

2. The method in accordance with claim 1, in which two identical pincer jaws (1) are used.

3. The method in accordance with claim 1 or 2, in which for purposes of separating the scrap material (11) from the drill bit the scrap material (11) is sheared off along the cutting edges (10).

4. The method in accordance with one of the preceding claims, in which the separation between the scrap material (11) and the wire nail (7) extends over the whole length of the cutting edges (10).

5. A screw, a drill or a drilling rivet with a drill bit, which can be manufactured in accordance with the method in accordance with one of the preceding claims, wherein the drill bit is formed by the movement of two pincer jaws (1) towards one another, and has two cutting edges (10) and two axial longitudinal edges, **characterised in that** by virtue of the separation of scrap material (11) from the drill bit along the cutting edges (10) while the pincer jaws (1) are closing, the two cutting edges (10) are formed without any burrs and **in that**, by virtue of the subsequent shearing of the scrap material (11) from the drill bit along a defined line of fracture on the axial longitudinal edges between the scrap material (11) and the drill bit, a burr is present on the two axial longitudinal edges.

6. A pair of pincer jaws for the manufacture of a drill bit, in particular a drill bit of a screw, in which
6.1 each pincer jaw (1) has a recess (2), which
6.2 in the closed state of the pincer jaws (1) forms the negative shape of the drill bit, and
6.3 has an accommodation space (4) surrounding the recess (2), which receives the material displaced in the course of manufacture of the drill bit, wherein
6.4 the boundary between the recess (2) and the accommodation space (4) is formed along the two sides running parallel to the longitudinal axis of the recess, such that
6.5 in the closed state of the pincer jaws the two pincer jaws (1) do not make contact on this boundary, and
6.6 the boundary between the recess (2) and the accommodation space (4) is formed along the two cutting edges (10) to be manufactured, such that
6.7 in the closed state of the pincer jaws the two pincer jaws (1) make contact, or overlap, on this boundary, at least in some sections.

7. The pair of pincer jaws in accordance with claim 6, in which the boundary between the recess (2) and the accommodation space (4) has a pincer edge (3) on at least one pincer jaw (1) along at least one longitudinal side.

8. The pair of pincer jaws in accordance with claim 6 or 7, in which the boundary between the recess (2) and the accommodation space (4) has a cutting edge or shearing edge (6) on at least one pincer jaw (1) along both cutting edges (10) of the drill bit to be manufactured.

9. The pair of pincer jaws in accordance with one of the claims 6 to 8, in which the two pincer jaws (1) are of identical design.

## Revendications

1. Procédé destiné à fabriquer une pointe autotaraudeuse, notamment la pointe autotaraudeuse d'une vis, comportant les étapes de procédé suivantes :
1.1 on positionne par une extrémité (8) une pointe de tréfilerie (7) dans l'espace intermédiaire entre deux mâchoires de pinçage (1) écartées,
1.2 on rapproche les mâchoires de pinçage (1),
1.3 à la fermeture des mâchoires de pinçage (1) :
1.3.1 la pointe autotaraudeuse est façonnée entre les mâchoires de pinçage (1),
1.3.2 la matière excédentaire est refoulée dans un pion (11) entourant l'extrémité (8) de la pointe de tréfilerie (7),
1.3.3 le pion (11) sur les côtés longitudinaux de la pointe de tréfilerie (7) se déforme pour former un endroit de rupture théorique,
1.3.4 le pion (11) est séparé de la pointe de tréfilerie (7) le long des taillants (10) de la pointe autotaraudeuse ; et
1.4 après le démoulage de la pointe autotaraudeuse, on tranche le pion (11) de la pointe de tréfilerie (7).

2. Procédé selon la revendication 1, lors duquel on utilise deux mâchoires de pinçage (1) identiques.

3. Procédé selon la revendication 1 ou 2, lors duquel pour la séparation du pion (11) de la pointe autotaraudeuse, on tranche le pion (11) le long des taillants (10).

4. Procédé selon l'une quelconque des revendications précédentes, lors duquel la séparation entre le pion (11) et la pointe de tréfilerie (7) s'étend sur toute la longueur des taillants (10).

5. Vis, foret ou rivet autotaraudeur avec une pointe autotaraudeuse, susceptible d'être fabriquée à l'aide du procédé selon l'une quelconque des revendications précédentes, la pointe autotaraudeuse étant façonnée au moyen d'un déplacement de deux mâchoires de pinçage (1) l'une vers l'autre et comportant deux taillants (10) et deux arêtes longitudinales axiales, caractérisé(e) en ce que du fait de la séparation d'un pion (11) de la pointe autotaraudeuse le long des taillants (10) lors de la fermeture des mâchoires de pinçage (1), les deux taillants (10) sont conçus sans bavure et en ce que du fait du tranchage consécutif du pion (11) de la pointe autotaraudeuse le long d'un endroit de rupture théorique, une bavure est présente sur les arêtes longitudinales axiales entre le pion (11) et la pointe autotaraudeuse.

6. Paire de mâchoires de pinçage destinée à fabriquer une pointe autotaraudeuse, notamment une pointe autotaraudeuse d'une vis, sur laquelle
6.1 chaque mâchoire de pinçage (1) comporte un creux (2), qui
6.2 dans la position fermée des mâchoires de pinçage (1) créé la forme négative de la pointe autotaraudeuse et
6.3 comporte un espace de logement (4) entourant le creux (2), réceptionnant la matière refoulée lors de la fabrication de la pointe autotaraudeuse,
6.4 la limite entre le creux (2) et l'espace de logement (4) étant conçue le long des deux côtés qui s'écoulent à la parallèle de l'axe longitudinal du creux, de telle sorte que
6.5 les deux mâchoires de pinçage (1) ne se touchent pas sur cette limite, lorsque la paire de mâchoires de pinçage est fermée, et
6.6 la limite entre le creux (2) et l'espace de logement (4) est conçue le long des deux taillants (10) de telle sorte que
6.7 les deux mâchoires de pinçage (1) se touchent ou se recoupent au moins partiellement sur cette limite, lorsque la paire de mâchoires de pinçage est fermée.

7. Paire de mâchoires de pinçage selon la revendication 6, sur laquelle, sur au moins une mâchoire de pinçage (1), la limite entre le creux (2) et l'espace de logement (4) comporte le long d'au moins un côté longitudinal une arête de pinçage (3).

8. Paire de mâchoires de pinçage selon la revendication 6 ou 7, sur laquelle la limite entre le creux (2) et l'espace de logement (4) le long des deux taillants (10) à fabriquer de la pointe autotaraudeuse comporte sur au moins une mâchoire de pinçage (1) un taillant ou une arête de cisaillement (6).

9. Paire de mâchoires de pinçage selon l'une quelconque des revendications 6 à 8, sur laquelle les deux mâchoires de pinçage (1) sont conçues à l'identique.
